Europäisches Patentamt

European Patent Office

Office européen des brevets

(11) Publication number: **0 178 009**
**B1**

(12) EUROPEAN PATENT SPECIFICATION

(45) Date of publication of patent specification: **11.04.90**

(51) Int. Cl.⁵: **B 09 B 5/00,** B 03 D 1/02

(21) Application number: **85201548.6**

(22) Date of filing: **25.09.85**

(54) Process for reconditioning contaminated soil.

(30) Priority: **27.09.84 NL 8402951**

(43) Date of publication of application:
**16.04.86 Bulletin 86/16**

(45) Publication of the grant of the patent:
**11.04.90 Bulletin 90/15**

(84) Designated Contracting States:
**BE DE FR GB IT NL SE**

(56) References cited:
FR-A- 506 763    US-A-2 780 585
NL-A-8 203 415    US-A-3 979 282
US-A-2 578 790    US-A-4 336 136

HANDBOEK BODEMSANERINGSTECHNIEKEN,
1st July 1983, page 33, Staatsuitgeverij, 's-
Gravenhage, NL: *"Part II, page 33, lines 1-26;
figure *

CHEMICAL ABSTRACTS, vol. 74, no. 12, 22nd
March 1971, page 220, no. 57113w, Columbus,
Ohio, US; R.B. GRIEVES et al.: "Precipitate
flotation of coplexed cyanide", & ENG. BULL.

PURDUE UNIV., ENG. EXT. SER. 1969, no. 135
(Pt. 2), 989-97

TAGGART HANDBOOK OF MINERAL
DRESSING, 1945, Wiley & Sons, New York, US

(73) Proprietor: **Heidemij Uitvoering B.V.**
**Lovinklaan 1**
**NL-6821 HX Arnhem (NL)**

(72) Inventor: **Broeders, Antonius Johannes Maria**
**Dijkstraat 19**
**NL-5741 GP Beek en Donk (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

# EP 0 178 009 B1

**Description**

The invention relates to a process for reconditioning soil contaminated with cyanides, heavy metals and/or organic compounds comprising the steps of:

i) mixing the contaminated soil with water;

ii) conditioning the soil slurry for flotation;

iii) separating a part of the contaminants from the contaminated soil by flotation; and

iv) removing the contaminated float.

This process is disclosed in Handboek Bodemsaneringstechnieken (1st July 1983), page 33, Staatsuitgeverij, 's-Gravenhage, NL.

However, it has been found during research that the flotation residue contains a not inconsiderable residual quantity of cyanides which are caked onto or found inside the pores of soil particles. The concentration of cyanide in the contaminated soil can be further lowered if said cyanide compounds, whether caked on or absorbed into the pores, are also removed.

The process according to the invention is therefore characterized by the steps of

v) removing by hydrolysis, using a hydrolysis solution, residual contaminants from the flotation residue, i.e. the soil initially subjected to the flotation separating a part of the contaminants from the contaminated soil by flotation, said residual contaminants being transferred into the hydrolysis solution;

vi) separating the soil from the hydrolysis solution;

vii) removing the contaminants from the hydrolysis solution; and

viii) recycling the hydrolysis solution to the hydrolysis step v).

It is noted that, NL—A—8203415 discloses a process for purifying soil contaminated with cyanide. All cyanide compounds are converted in water soluble complexes using a soil percolation treatment with an alkali solution. Thereafter, the pH of the solution containing cyanides is lowered and acid, and the cyanides are removed from the solution by precipitation or by oxidation. NL—820345 does not teach either the removal of contaminants other than cyanides, or the use as starting material contaminated soil initially subjected to a hydrolysis treatment as disclosed in Handboek Bodemsaneringstechnieken. Furthermore, the residual solution contains acid and salts and is to be purified before disposal into the environments; the residual solution is recycled in the process of the invention.

Not only an extra amount of contamination is freed from the soil, but because the hydrolysis step follows the flotation step, an important saving of hydrolysis chemicals ($K_2CO_3$ and NaOH up to pH 12) can moreover be achieved.

The volume of the concentrated fraction to be removed can be limited further if the float is thickened.

Examination of the soil to be reconditioned has shown that, particularly in respect of cyanide contamination, the cyanide compounds have generally attached themselves to soil particles up to a determined maximum particle dimension. According to the invention it is therefore recommended that, prior to the flotation step i, soil particles up to a predetermined particle dimension are separated by scalping. Scalping is carried out preferably up to a particle dimension lying between about 100—50 μm, and which is preferably 75 μm.

If the scalped soil fraction is added to the soil to be reconditioned, a maximum quantity of scalped soil fraction is continuously recycled and thereby "sand-blasted" during the following scalping process, which involves a reduction of the particle dimension of said scalped soil fraction as a result of which said sand-blasted and also scalped fraction can be better floated.

If the scalped fraction is removed, it is recommended that the scalped soil fraction be thickened.

When separating contaminations from the soil by flotation, it is particularly important to separate by flotation only that soil fraction in which the contamination to be separated is inherently present, while other soil fractions, particularly clay particles, are not separated in the float, so that on the one hand the float volume remains small and on the other hand the disturbing effects of clay particles in particular (which generally contain only a relatively small quantity of contamination) may be avoided. It has been found during research that if, during flotation, a mono-unsaturated fatty acid is used as collector, whereby preferably the cis isomer of the fatty acid is used, and more preferably the number of methylene ($CH_2$) groups on either side of the double carbon carbon bond is equal, whereby the fatty acid oleic acid has emerged as the most favourable mono-unsaturated fatty acid, a soil fraction contaminated with cyanides can be separated particularly selectively with respect to clay particles. If for example phenols, creosoles, organo-chlorine compounds such as $CCl_4$ and/or mineral oils are present in the contaminated soul as organic compounds which also act as collector during flotation, said organic compounds can also be separated in the float together with the cyanides.

In view of the fact that oleic acid reacts mainly with crystalline cyanide compounds, it is to be recommended that a quaternary ammonium compound also be used as collector, so that ionic cyanide compounds are thereby separated in the float. Ethylhexadecyltrimethylammonium chloride (arquad) is preferably used as quaternary ammonium compound.

According to the state of the art, foaming substances, other collectors and also depressors can if necessary be added.

If the contaminated soil also contains contamination in the form of heavy metals, it is recommended that prior to the flotation step a having the mono-unsaturated fatty acid as collector, other contamination is

2

separated from the soil in an additional flotation step at pH 7—9 using xanthates as collector. In this way, both the contaminants, respectively heavy metals and cyanide compounds, are separated successively in two separate flotation steps, while because the pH increases in the successive flotation steps, a saving of chemicals can be achieved.

Mentioned and other characteristics will be explained on the basis of a number of non-limitative embodiments of the process according to the invention, given by way of example with reference to the annexed drawings, wherein:

Fig. 1 shows a flow diagram of the process according to the invention;

Fig. 2—6 each show a variant of the process according to the invention as shown in Fig. 1.

Fig. 7 shows on a larger scale a perspective partly broken away view of detail VII from Fig. 1.

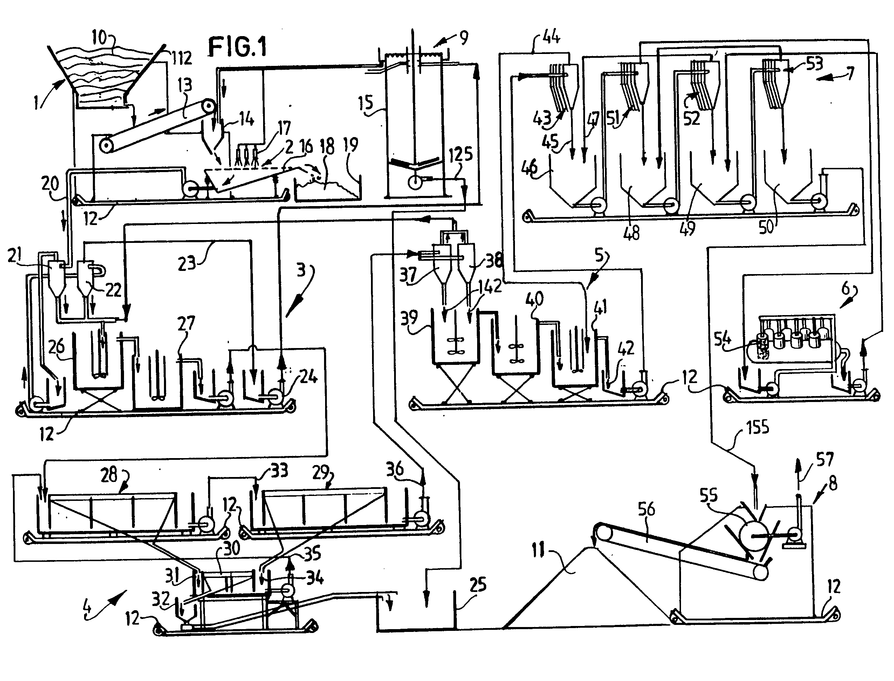

Fig. 1 shows a first installation for performing the process according to the invention. Said installation is built up out of a number of separate, mobile units:

1. storage unit;
2. classification unit;
3. separation/conditioning unit;
4. flotation units;
5. separation/hydrolysis unit;
6. filler unit;
7. counter current washing unit;
8. filter unit; and
9. thickening unit.

The whole system has a throughput of 27 tons of contaminated soul 10 per hour (corresponding at a density of 1,3 tons per cubic metre to 21 cubic metres contaminated soil per hour). The cyanide concentration in the contaminated soil 10 can amount to 3,000 ppm., while the cyanide concentration in the reconditioned soil 11 is equal to a maximum 5 ppm.

The units 1—9 are placed on carriages 12, so that the whole installation is mobile and, as will be found from reading the full description, can be set up on the spot in an appropriated sequence, depending on the composition of the contaminated soil.

The contaminated soil 10 is carried from a holder 112 onto a conveyor belt 13 provided with unshown weighing means. By regulating the feed from said holder 12 the in-feed of contaminated soil 10 can generally be determined exactly with said weighing means. The conveyor belt 13 unloads the contaminated soil into a holder 14, wherein said contaminated soil 10 is mixed with water coming from the thickener 15 and the screening unit 8, and is subsequently conveyed onto a shaking screen 16. Said screen 16 has an aperture of a nominal 4 mm. During screening the material to be screened is sprayed with water coming from spray heads 17 so that generally only particles 18 having a particle dimension larger than 4 mm reach the container 19. The fraction having a particle dimension generally smaller than 4 mm is subsequently conveyed via the conduit 20 to the separation/conditioning unit 3.

As table 1 shows, the greatest part of the cyanide contamination is concentrated in a particle fraction smaller than 74 micrometers. Scalping is carried out in two stages with the aid of cyclones 21 and 22. The overflow from the cyclone 22 (a slurry containing the particles of a dimension smaller than 74 micrometers) is conveyed via the conduit 23, the pump 24, into the thickener 15, wherein a solid/liquid separation is carried out. The liquid is added to the holder 14 in the previously described manner. The thickened slurry is taken via the conduit 125 into the container 25, in which concentrated waste is collected.

The combined underflow from cyclones 21 and 22 is carried into a first conditioning vessel 26, 1 kg $Na_2SiO_3$, 1 kg NaOH, 100 g oleic acid and 400 g arquad are herein added to the slurry per ton of dry substance. In the conditioning vessel this mixture has a pH of 10 and is conveyed to the first flotation cell 28. The float 31 from said flotation cell 28 is floated once again in flotation cell 30, the float 32 thereof being carried away to the container 25. The flotation residue 33 from flotation cell 28 is added to flotation cell 29, the float thereof being returned to said flotation cell 28. It is also possible for float 34 to be floated in flotation cell 30, the float 32 thereof also arriving in the container 25. The flotation residue 35 of the flotation cell 30 is added to the conditioned slurry entering the flotation cell 28. The flotation residue 36 from flotation cell 29 is subsequently added to the separation/hydrolysis unit 5. About 95% of the cyanides present are removed by flotation in the flotation unit 4 and carried into the container 25. 5% of the cyanide present is firmly caked onto or trapped in pores of the soil particles, the particle size whereof lies between 250 micrometres and 2 mm, this fraction generally not being floatable.

Depending on the volume of the flotation residue 36, same is de-watered with the aid of a number of cyclones 37, 38 in parallel connection. The overflow of both said cyclones 37, 38 is added to the underflow of cyclones 21 and 22 and conveyed into the first conditioning vessel 26.

With the aid of the hydrolysis vessels 39—41, the cyanide which is firmly caked onto or absorbed into the pores of the soil particles is leached, 0.5 kg $K_2CO_3$ and 1 kg NaOH is added per ton of dry substance to the underflow 142 of cyclones 37 and 38. It has been found that as a result of this hydrolysis the soil at the end only contains less than 5 ppm of cyanide. The slurry 42 leaving the hydrolysis vessel 41 is pumped to a first group of cyclones in parallel connection 43. The overflow 44 from said cyclones 43 is returned to the hydrolysis vessel 41, while the underflow 45 from said cyclones 43 is conveyed into a tank 46 wherein said de-watered underflow 45 is mixed with cleaner water 47. The amount of water to be added in each case is such that the slurry again obtains a density inherently equal to that of the slurry 42. Washing is repeated in the tanks 48 and 49, whereby in each case cleaner water is used, which in the case of the vessel 48 comes from the group of cyclones 53 and which in the case of the vessel 49 comes from a filter unit 6, wherein contamination is absorbed with the aid of carbon filters 54.

The groups of cyclones 43, 51, 52 and 53 are, as regards their number, chosen such that an optimal liquid/solid separation is obtained.

The de-watered slurry 155 is transported from the tank 50 to the rotating filter unit 55, where a last solid substance/water separation is performed and whereafter the reconditioned soil 11 is carried away via the conveyor belt 56. The filtrate 57 is added to the holder 14 and/or the spray heads 17 of the classification unit 2.

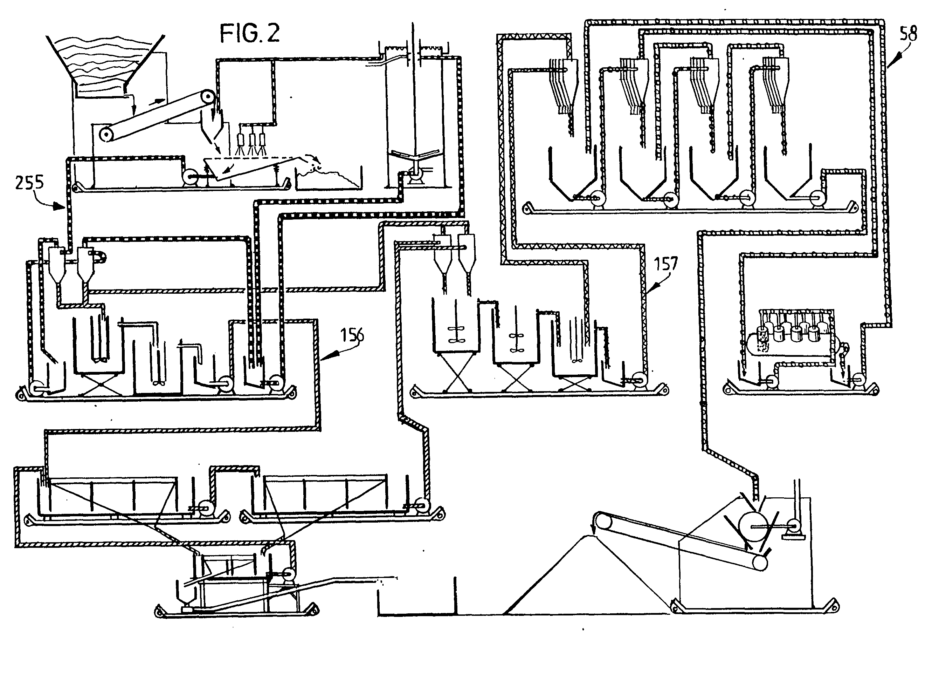

Fig. 2 shows a flow diagram inherently the same as that in Fig. 1, but wherein the different liquid cycles are shown at the moment when the installation is started up. The liquid cycle 255 contains water, the liquid cycle 156 contains water, oleic acid, arquad, cylycate (to increase the hydrophilic character of the soil) and soda, while the pH lies between 9 and 11. The liquid cycle 157 contains water, $K_2CO_3$, and NaOH and has a pH of about 12. Finally, the liquid cycle 58 generally contains water.

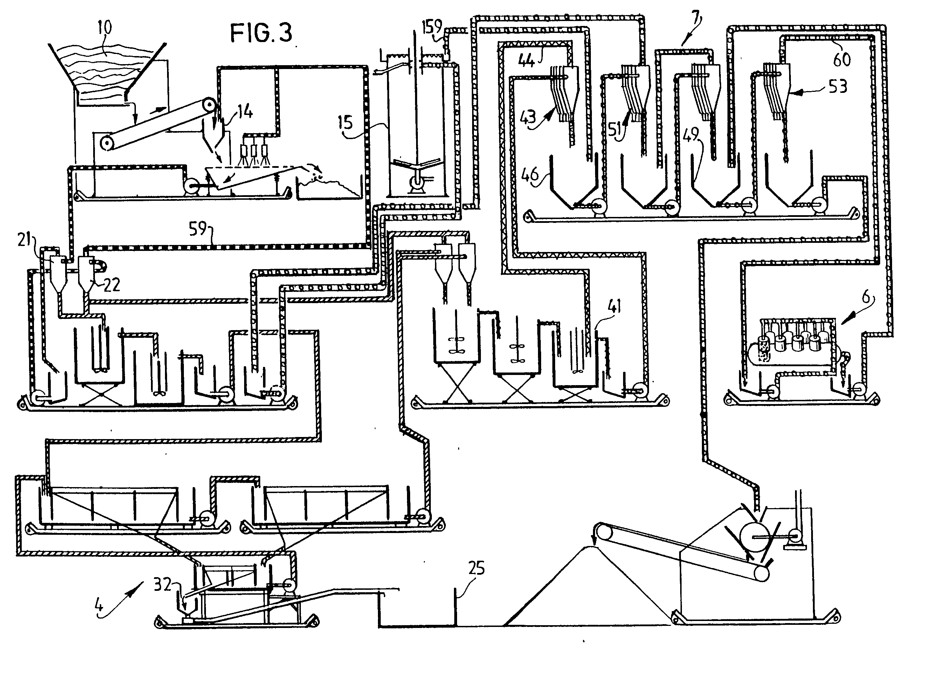

Fig. 3 shows a variant where an improvement is made relative to the installation as shown in Fig. 1. The particle fraction smaller than 75 micrometres scalped with the aid of cyclones 21 and 22 is not, as according to Fig. 1 and 2, thickened and carried away as thickened slurry 125, but is returned via conduit 59 to the holder 14, wherein said scalped particle fraction is mixed with the soil 10 to be reconditioned. In this way, said scalped particle fractions are subsequently so-called sand-blasted with larger particles in cyclones 21 and 22, whereby their particle size is reduced to about 30 micrometres, which is considerably beneficial to their subsequent flotation in the flotation unit 4. The consequence of this is that not always, as according to Fig. 1 and 2, about 5% of the amount of contaminated soil 10 fed in is conveyed via the thickener 15 into the free container 25, but that via the float 32 generally only 3% of the amount of contaminated soil 10 fed in is conveyed into said container 25. This decrease is essentially the result of the selectivity of oleic acid for the flotation of cyanide particles relative to clay particles, which selectivity is completely lacking in the separation performed in cyclones 21 and 22, whereby clay particles also appear via the thickener 15 in the container 25, which results in an increase of the volume to be carried away.

In the embodiment as shown in Fig. 3, the thickener 15 can be applied in the counter current washing unit 7 in order to increase the water volume present therein by about 25 cubic metres. As shown in Fig. 3, the overflow from the group of cyclones 51 is connected onto the thickener 15, the overflow of which 159 discharges into the tank 46. In addition the overflow 60 of the group of cyclones 53 is connected onto the filter unit 6, which, as already described, discharges the filtered water into the tank 49. As in Fig. 1, the overflow 44 of the group of cyclones 43 is connected onto the hydrolysis vessel 41.

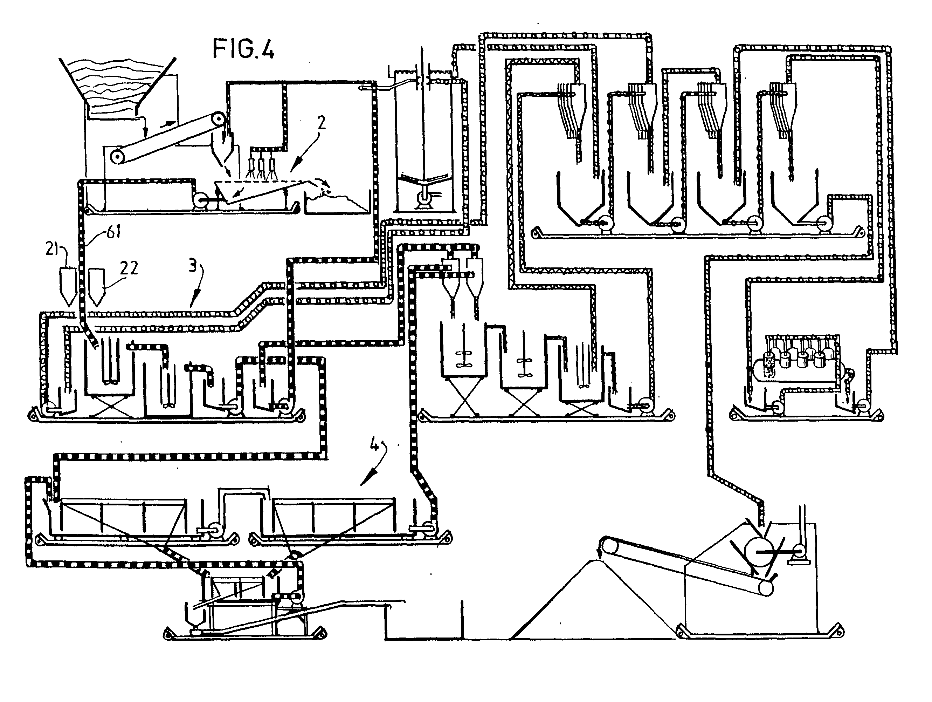

Fig. 4 shows yet another embodiment, whereby the cyclones 21 and 22 are in this case rendered completely inoperative. The mixture 61 leaving the classification unit 2 is conveyed directly into the conditioning unit 3' and subsequently floated in the flotation unit 4.

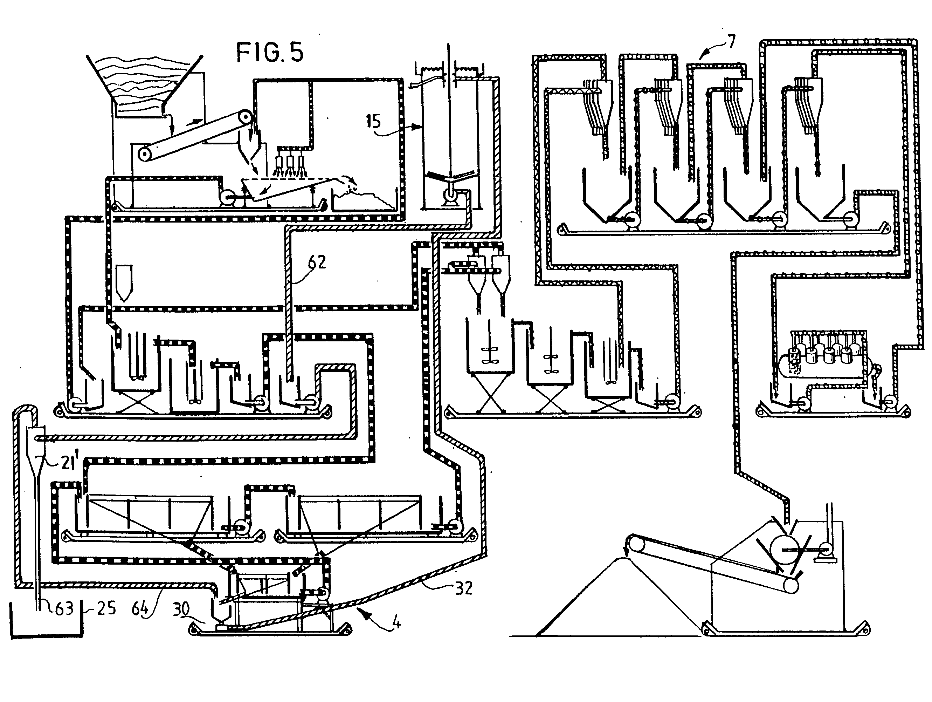

Fig. 5 shows another variant whereby, with regard to Fig. 4, the thickener 15 is not incorporated in the counter current washing unit 7 but is connected onto the flotation cell 30 of flotation unit 4, in order to thicken the float 32, whereafter the thickened float 62 is de-watered with the aid of cyclone 21' and the de-watered underflow 63 is emptied into container 25 and the watery overflow 64 returned to the flotation unit 4. In this case the total production of highly concentrated contaminated soil amounts to only about 2% of the throughput of the whole installation.

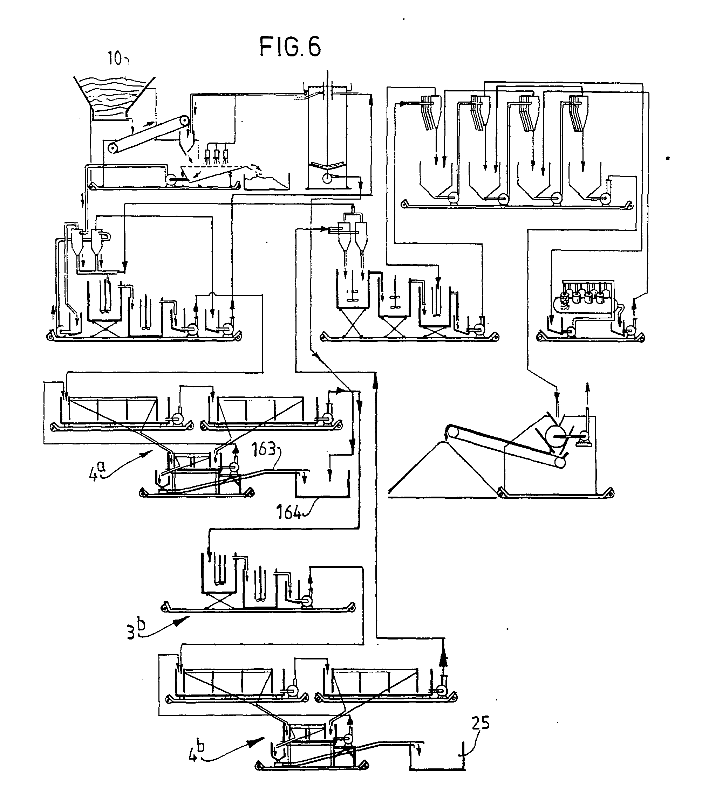

Finally, Fig. 6 shows a variant corresponding with Fig. 1 and 2, whereby the separation/conditioning unit 3 and the flotation unit 4 are given a dual form as separation/conditioning units 3a and 3b and flotation units 4a and 4b. Using the units 3a and 4a, heavy metals from the contaminated soil 10 can now, by application of xanthates at a pH of about 7, be carried away via the float 163 into the container 164, while in the subsequent conditioning unit 3b and flotation unit 4b cyanide particles and cyanide ions are removed into the container 25 in the previously described manner, using oleic acid/arquad at a pH of 7—11.

The adjustment of the pH in the flotation step and hydrolysis step is to a large extent dependent on the nature of the contamination. If the nature of the contamination emphasizes flotation then the pH is chosen near 7 (the hydrolysis step operates sub-optimally); is the hydrolysis emphasized then the pH is chosen near 11 (flotation operates sub-optimally). That is pH is a process condition which varies in dependence of the contaminated soil to be processed.

The washing unit 7 is of great importance to: a. contaminations which pass the flotation unit 4 are removed; provided that sufficient clean water is available, no contamination can leave the system;

b. the volume available provides a latent storage buffer, if the flotation unit and/or hydrolysis unit works temporarily sub-optimally as a result of a disturbance in the process;

c. the cyclones effect a grating action on particles present, so that adhered contamination is released; and

d. furthermore the cyclones provide the possibility of classification for the overflow and underflow thereof.

With all the installations it is also possible to separate phenols, creosols, organic chlorine compounds and mineral oils because these organic compounds act as collectors in the flotation unit 4 and are thereby separated in the float. Depending on the presence of organic compounds, it could be possible to add additional foamers, for example flotanol.

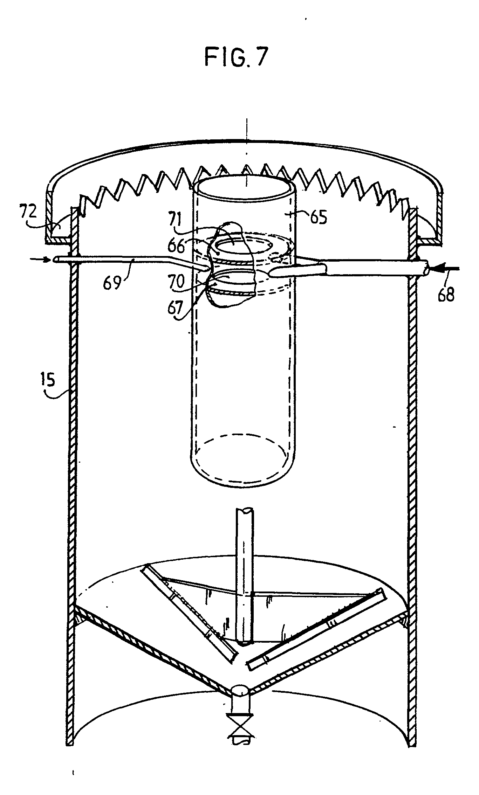

Finally, Fig. 7 shows on a larger scale the thickener 15. By feeding in the liquid 68 to be thickened radially on one side of a central cylindrical unit 65 between two circular rings 66, 67 and the flocculant 69, for example up to a maximum of 5 ppm non-ionic polyacrylamide, on the other, a thorough mixing between both flows results inside the space enclosed by said rings 66, 67, so that the flocks sink downward via the central opening 70 and the water flows away likewise via opening 71, subsequently flowing upwards and being carried off via the overflow 72. As a result of this typical manner of thoroughly mixing in the central unit 65 the diameter as well as the total volume of the thickener 15 can be greatly restricted. Said diameter can for example be as small as 3 m in an installation as shown in the Figures 1, 2 and 6.

TABLE 1

Particles size distribution, cyanide concentration (A) and cyanide concentration distribution (B) in contaminated soil

| Particle size distribution (µm) | A (mg/kg) | B (weight %) |
|---|---|---|
| 2,000—500 | 150 | 0.42 |
| 500—295 | 140 | 1.22 |
| 295—150 | 280 | 7.14 |
| 150—74 | 140 | 0.35 |
| 74—63 | 1,780 | 1.35 |
| 63 | 40,000 | 89.04 |

**Claims**

1. Process for reconditioning soil (10) contaminated with cyanides, heavy metals and/or organic compounds comprising the steps of:
   i) mixing the contaminated soil (10) with water;
   ii) conditioning the soil (10) slurry for flotation;
   iii) separating a part of the contaminants (31, 32, 34) from the contaminated soil (10) by flotation;
   iv) removing the contaminated float (31, 32, 34, 62, 163); the process being characterized by the steps of:
   v) removing by hydrolysis, using a hydrolysis solution, residual contaminants from the flotation residue (36), i.e. the soil initially subjected to the flotation step iii, said residual contaminants being transferred into the hydrolysis solution;
   vi) separating the soil (11) from the hydrolysis solution;
   vii) removing the contaminants from the hydrolysis solution; and
   viii) recycling the hydrolysis solution to the hydrolysis step v.

2. Process as claimed in Claim 1, characterized in the flotation residue (36) is thickened.

3. Process as claimed in Claim 1 or 2, characterized in that prior to the flotation step iii, a soil fraction up to a pre-determined particle dimension is separated by scalping.

4. Process as claimed in Claim 3, characterized in that said particle dimension lies between 100—50 µm, and is preferably 75 µm.

5. Process as claimed in Claim 3 or 4, characterized in that the scalped fraction is added to the soil to be reconditioned.

6. Process as claimed in Claim 3—5, characterized in that the scalped soil fraction is thickened.

7. Process as claimed in Claims 1—6, characterized in that a mono-unsaturated fatty acid is used as collector during flotation, preferably the cis monomer of the fatty acid is used and more preferably the number of methylene ($CH_2$) groups on either side of the double carbon carbon bond is equal.

8. Process as claimed in Claim 7, characterized in that the fatty acid is oleic acid (cis-8 heptadecane-1 carboxylic acid).

9. Process as claimed in Claims 1—8, characterized in that the pH of the flotation medium lies between 7—11.

10. Process as claimed in Claims 7—9, characterized in that on the basis of up to 6 kg dry substance, preferably 100 g mono-unsaturated fatty acid per ton of contaminated soil is used.

11. Process as claimed in Claims 1—10, characterized in that a quatenary ammonium compound is also used as collector, preferably ethylhexadecyltrimethyl ammonium chloride is used.

12. Proces as claimed in Claims 7—11, characterized in that prior to the flotation step iii, using the mono-unsaturated fatty acid as collector, other contaminants are separated from the soil (10) in an additional flotation step at pH 7—9 using xanthates as collector.

13. Process as claimed in any of the preceding Claims, characterized by washing the flotation residue (36) in a number of subsequent groups (43, 51, 52, 53) of cyclones, each group consists of at least one cyclone.

14. Process as claimed in Claim 13, characterized in that washing liquid containing contaminants is subjected to flotation.

**Patentansprüche**

1. Verfahren zum Wiederaufarbeiten von Erde (10), die mit Cyaniden, Schwermetallen und/oder organischen Verbindungen Verunreinigt ist, mit folgenden Schritten:
   i. Vermischen der verunreinigten Erde (10) mit Wasser;
   ii. Aufarbeiten des Erd (10)—Schlammes für die Flotation;
   iii. Abscheiden eines Teils der Verunreinigungen (31, 32, 34) aus der verunreinigten Erde (10) mittels Flotation;
   iv. Entfernen der verunreinigten Schwebekörper (31, 32, 34, 62, 163);
   wobei das Verfahren durch folgende Schritte gekennzeichnet ist:
   v. Entfernen übriger Verunreinigungen mittels Hydrolyse unter Verwendung einer Hydrolyselösung aus dem Flotationsrückstand (36), d.h. der Erde, die anfangs dem Flotationsschritt iii unterworfen worden ist, wobei diese übrigen Verunreinigungen in die Hydrolyselösung überführt werden;
   vi. Abtrennen der Erde (11) aus der Hydrolyselösung;
   vii. Entfernen der Verunreinigungen aus der Hydrolyselösung;
   viii. Rückführen der Hydrolyselösung in den Hydrolyseschritt v.

2. Verfahren gemäß Anspruch 1, dadurch gekennzeichnet, daß der Flotationsrückstand (36) eingedickt wird.

3. Verfahren gemäß Anspruch 1 oder 2, dadurch gekennzeichnet, daß vor dem Flotationsschritt iii eine Erdfraktion mit einer vorbestimmten Partikelgröße mittels Klassieren abgetrennt wird.

4. Verfahren gemäß Anspruch 3, dadurch gekennzeichnet, daß die Partikelgröße zwischen 100 bis 50 µm liegt und vorzugsweise 75 µm beträgt.

5. Verfahren gemäß Anspruch 3 oder 4, dadurch gekennzeichnet, daß die durch Klassieren abgetrennte Fraktion der wiederaufzuarbeitenden Ende zugegeben wird.

6. Verfahren gemäß Anspruch 3 bis 5, dadurch gekennzeichnet, daß die durch Klassieren abgetrennte Erdfraktion eingedickt wird.

7. Verfahren gemäß Ansprüche 1—6, dadurch gekennzeichnet, daß eine mono-ungesättigte Fettsäure als Kollektor während der Flotation verwendet wird, vorzugsweise das cis-Isomer der Fettsäure verwendet wird und besonders bevorzugt die Anzahl der Methylen (CH₂)-Gruppen auf jeder Seite der Kohlenstoffdoppelbindung gleich ist.

8. Verfahren gemäß Anspruch 7, dadurch gekennzeichnet, daß die Fettsäure eine Ölsäure (cis - 8 - Heptadecan - 1 - Carbonsäure) ist.

9. Verfahren gemäß Ansprüchen 1—8, dadurch gekennzeichnet, daß der pH-Wert des Flotationsmediums zwischen 7—11 liegt.

10. Verfahren gemäß den Ansprüchen 7—9, dadurch gekennzeichnet, daß auf der Basis von bis zu 6 kg Trockensubstanz vorzugsweise 100 g mono-ungesättigte Fettsäure je Tonne verunreinigter Erde verwendet werden.

11. Verfahren gemäß den Ansprüchen 1—10, dadurch gekennzeichnet, daß auch eine quaternäre Ammoniumverbindung als Kollektor verwendet wird, vorzugsweise Ethylhexadecyltrimethylammoniumchlorid verwendet wird.

12. Verfahren gemäß den Ansprüchen 7—11, dadurch gekennzeichnet, daß vor dem Flotationsschritt iii, bei dem die mono-ungesättigte Fettsäure als Kollektor verwendet wird, andere Verunreinigungen von der Erde (10) in einem zusätzlichen Flotationsschritt bei einem pH-Wert von 7—9 unter Verwendung von Xanthaten als Kollektor abgetrennt werden.

13. Verfahren gemäß einem der vorangehenden Ansprüche, dadurch gekennzeichnet, daß der Flotationsrückstand (36) in einer Anzahl von aufeinanderfolgenden Zyklongruppen (43, 51, 52, 53) gewaschen wird, wobei jede Gruppe aus mindestens einem Zyklon besteht.

14. Verfahren gemäß Anspruch 13, dadurch gekennzeichnet, daß Waschfüssigkeit, die Verunreinigungen enthält, einer Flotation unterworfen wird.

**Revendications**

1. Procédé pour reconditionner un sol (10) contaminé par des cyanures, métaux lourds et/ou composés organiques, comprenant les étapes consistant à:

i) mélanger le sol contaminé (1) à de l'eau,

ii) conditionner la boue de sol (10) pour une flottation,

iii) séparer, par flottation, une partie des contaminants (31, 32, 34) du sol contaminé (10),

iv) enlever le flot contaminé (31, 32, 34, 62, 163),

le procédé étant caractérisé par les étapes consistant à:

v) enlever par hydrolyse, en utilisant une solution d'hydrolyse, les contaminans résiduels du résidu de flottation (36), c'est-à-dire du sol initialement soumis à la flottation de l'étape iii, les contaminants résiduels étant transférés dans la solution d'hydrolyse,

vi) séparer le sol (11) de la solution d'hydrolyse;

vii) enlever les contaminants de la solution d'hydrolyse, et

viii) recycler la solution d'hydrolyse pour l'hydrolyse de l'étape v.

2. Procédé selon la revendication 1, caractérisé en ce que le résidu de flottation (36) est épaissi.

3. Procédé selon la revendication 1 ou 2, caractérisé en ce qu'avant la flottation de l'étape iii, on sépare par tamisage préalable une fraction du sol jusqu'à une taille de particules prédéterminée.

4. Procédé selon la revendication 3, caractérisé en ce que cette taille de particules est comprise entre 50 et 100 μm, et de préférence égale à 75 μm.

5. Procédé selon la revendication 3 ou 4, caractérisé en ce que la fraction tamisée est ajoutée au sol à reconditionner.

6. Procédé selon l'une quelconque des revendications 3 à 5, caractérisé en ce que la fraction de sol tamisée est épaissie.

7. Procédé selon l'une quelconque des revendications 1 à 6, caractérisé en ce qu'on utilise un monoacide gras non saturé comme collecteur pendant la flottation, et de préférence l'isomère cis de l'acide gras, et, d'une manière encore plus préférentielle, le nombre de groupes de méthylène ($CH_2$) est égal de chaque côté de la double liaison carbone-carbone.

8. Procédé selon la revendication 7, caractérisé en ce que l'acide gras est de l'acide oléique (acide carboxylique cis-8 heptadécane-1).

9. Procédé selon l'une quelconque des revendications 1 à 8, caractérisé en ce que le pH du milieu de flottation est compris entre 7 et 11.

10. Procédé selon l'une quelconque des revendications 7 à 9, caractérisé en ce que, sur la base d'au plus 6 kg de substance sèche, on utilise de préférence 100 g de monoacide gras non saturé par tonne de sol contaminé.

11. Procédé selon l'une quelconque des revendications 1 à 10, caractérisé en ce qu'on utilise comme collecteur un composé quaternaire d'ammonium, de préférence de l'éthylhexadécyltriméthyle de chlorure d'ammonium.

12. Procédé selon l'une quelconque des revendications 7 à 11, caractérisé en ce qu'avant la flottation de l'étape iii utilisant le monoacide gras non saturé comme collecteur, d'autres contaminants sont séparés du sol (10) lors d'une étape de flottation supplémentaire, à un pH de 7 à 9 et en utilisant des xanthates comme collecteur.

13. Procédé selon l'une quelconque des revendications précédentes, caractérisé en ce que lors du lavage du résidu de flottation (36) dans un certain nombre de groupes consécutifs (43, 51, 52, 53) de cyclones, chaque groupe est constitué d'au moins un cyclone.

14. Procédé selon la revendication 13, caractérisé en ce que le liquide de lavage contenant des contaminants est soumis à une flottation.

FIG.1

FIG.2

EP 0 178 009 B1

FIG.3

FIG.4

EP 0 178 009 B1

FIG.5

# FIG.6

## FIG. 7